# EUROPEAN PATENT APPLICATION

(11) **EP 2 548 915 A1**
(43) Date of publication of application: **23.01.2013**
(21) Application number: 11756387.4
(22) Date of filing: 17.03.2011
(51) Int. Cl.: C08J 9/16

(54) **POLYMER EXPANDED PARTICLE, EXPANDED TONER AND METHOD FOR PRODUCING POLYMER EXPANDED PARTICLE AND EXPANDED TONER**

(30) Priority: 17.03.2010 JP 2010060092
(71) Applicant: Tomoegawa Co., Ltd., Tokyo 104-8335 (JP); National University Corporation Shizuoka University, Shizuoka-shi, Shizuoka 422-8529 (JP)
(72) Inventor: SANO, Takayuki, Shizuoka-shi Shizuoka 421-0192 (JP); KONG, Chang Yi, Hamamatsu-shi Shizuoka 432-8011 (JP); ZHANG, Tao, Hamamatsu-shi Shizuoka 432-8011 (JP); OKAJIMA, Izumi, Hamamatsu-shi Shizuoka 432-8011 (JP); SAKO, Takeshi, Hamamatsu-shi Shizuoka 432-8011 (JP)
(74) Representative: Eisenführ, Speiser & Partner
(86) International application number: PCT/JP2011/056372
(87) International publication number: WO 2011/115203

(57) **Abstract**

A polymer expanded particle and an expanded toner having small pores, and a production method thereof are provided. A polymer expanded particle comprises micropores having an average pore diameter of less than 50 µm. An expanded toner comprises micropores having an average pore diameter of 1 µm to less than 3 µm, wherein volume average particle diameter is 5 µm to less than 15 µm. A method for producing a polymer expanded particle comprises a first step for mixing specific polymer particles with high pressure gas or supercritical fluid, to prepare a mixture, a second step for impregnating with the high pressure gas or the supercritical fluid to the inside of the polymer particles, and a third step for reducing pressure and temperature of the mixture, to form the polymer expanded particle, wherein the pressure and temperature in the third step is reduced for 5 minutes or less from a state of 20 MPa or greater and 60 °C or greater to a state of less than 1 MPa and less than 30 °C, respectively.

## Description

### Technical Field

The present invention relates to a polymer expanded particle, an expanded toner, and a method for producing the polymer expanded particle and the expanded toner.

### Background Art

A conventional technique in which polymer particles are expanded by impregnating with supercritical fluid in a pressure vessel and then by reducing pressure and temperature is known (for example, see Patent Publication 1).

However, there was a problem in that it was difficult to provide a small pore having a diameter of less than 50 µm.

Patent Publication 1 is Japanese Unexamined Patent Application Publication No. 2007-063561.

### DISCLOSURE OF THE INVENTION

### PROBLEMS SOLVED BY THE INVENTION

The present invention was completed in view of the above-described circumstances, and an object of the present invention is to provide a polymer expanded particle and an expanded toner having small pores, and a production method thereof.

### MEANS FOR SOLVING THE PROBLEMS

According to the present invention, the above problem can be solved by the following technical composition.
(1) A polymer expanded particle comprising micropores having an average pore diameter of less than 50 µm.
(2) A polymer expanded particle comprising micropores having an average pore diameter of less than 3 µm.
(3) The polymer expanded particle according (2) wherein volume average particle diameter is less than 15 µm.
(4) A expanded toner comprising micropores having an average pore diameter of 50 nm to less than 3 µm, wherein volume average particle diameter is 5 µm to less than 15 µm.
(5) The expanded toner according to (4) wherein an average pore diameter of the micropores is 50 nm to 1 µm.
(6) The expanded toner according to (4) wherein specific gravity is less than 0.9.
(7) A method for producing a polymer expanded particle comprising: a first step for preparing a mixture by mixing polymer particles selected from a group of polyolefine, polyolefine copolymer, cyclic olefin, cyclic olefin copolymer resin, polystyrene, polystyrene copolymer, acrylic resin, polycarbonate, polyester resin and combination thereof, with high pressure gas or supercritical fluid, a second step for impregnating with the high pressure gas or the supercritical fluid to the inside of the polymer particles, and a third step for producing a polymer expanded particle by reducing pressure and temperature of the mixture, wherein the pressure and temperature in the third step is reduced for 5 minutes or less from a state of 20 MPa or greater and 60 °C or greater to a state of less than 1 MPa and less than 30 °C, respectively.
(8) The method for producing a polymer expanded particle according to (7), further comprising a fourth step for crushing and classifying the polymer expanded particle, to adjust a diameter thereof.
(9) The method for producing a polymer expanded particle according to (7), wherein the high pressure gas or the supercritical fluid comprises carbon dioxide.
(10) A method for producing an expanded toner comprising: a first step for mixing toner containing any one of styrene-acrylic copolymer resin, polyester resin or cyclic olefin copolymer resin, with high pressure gas or supercritical fluid, to prepare a mixture, a second step for impregnating with the high pressure gas or the supercritical fluid to the inside of the toner, a third step for reducing pressure and temperature of the mixture, to form the expanded toner, and a fourth step for crushing and classifying the expanded toner, to adjust a diameter thereof, wherein the pressure and temperature in the third step is reduced for 5 minutes or less from a state of 20 MPa or greater and 60 °C or greater to a state of less than 1 MPa and less than 30 °C, respectively.

The present invention can provide a polymer expanded particle and an expanded toner having small pores, and a production method thereof.

In addition, it can also provide an expanded particle having a uniform diameter.

Furthermore, it can also provide an expanded particle having a small diameter by decreasing pore size.

### BRIEF DESCRIPTION OF THE DRAWINGS

Fig. 1 is a schematic view showing a producing apparatus of the polymer expanded particle.
Fig. 2 is a scanning electron microscope image showing of the polymer expanded particle of Example.
Fig. 3 is a scanning electron microscope image showing of the polymer expanded particle of Comparative Example.

### BEST MODE FOR CARRYING OUT THE INVENTION

In the following, Embodiments of the present invention will be specifically explained with reference to figures.

### Polymer expanded particle and expanded toner

The polymer expanded particle of the present invention comprises micropores having an average pore diameter of less than 50 µm.

It is preferable that the average pore diameter be less than 10 µm, and it is more preferable that the average pore diameter be less than 3 µm.

Here, the average pore diameter is a value which micropores are photographs by an electron microscope, length of 100 micropores are measured, and the average thereof is calculated.

In addition, in the polymer expanded particle of the present invention, it is preferable that volume average particle diameter be 5 µm to less than 15 µm, since it is suitable as a toner for electrophotography. When the volume average particle diameter is too large, polymer expanded particles having desire diameter can be formed by crushing and classifying.

Here, the volume average particle diameter is a value measured by a Coulter counter method.

As an example of the polymer expanded particle, an expanded toner can be used.

In the expanded toner of the present invention, it is preferable that an average pore diameter of the micropores be 50 nm to less than 3 µm and a volume average particle diameter be 5 µm to less than 15 µm, and it is more preferable that an average pore diameter of the micropores be 50 nm to 1 µm and a volume average particle diameter be 5 µm to less than 15 µm.

Additionally, it is preferable that the specific gravity be less than 0.9, it is more preferable that it be less than 0.75, and it is most preferable that it be less than 0.5.

Here, the specific gravity is a value measured by a bulk density.

Consumption of the toner can be decreased by lightening, and high-resolution image can be formed by reducing bleed in heat-fixing.

### Production method

The method for producing a polymer expanded particle of the present invention comprises: a first step for preparing a mixture by mixing polymer particles selected from a group of polyolefine, polyolefine copolymer, cyclic olefin, cyclic olefin copolymer resin, polystyrene, polystyrene copolymer, acrylic resin, polycarbonate, polyester resin and combination thereof, with high pressure gas or supercritical fluid, a second step for impregnating with the high pressure gas or the supercritical fluid to the inside of the polymer particles, and a third step for producing a polymer expanded particle by reducing pressure and temperature of the mixture, wherein the pressure and temperature in the third step is reduced for 5 minutes or less from a state of 20 MPa or greater and 60 °C or greater to a state of less than 1 MPa and less than 30 °C, respectively.

In the second step, the uniform micropores can be formed by increasing impregnation time so as to impregnate with the high pressure gas or the supercritical fluid to the inside of the particle.

For example, it is preferable that impregnation time be 10 minutes or more when the volume average particle diameter of the polymer particle is about 10 µm.

It is preferable that reduction time of the pressure and temperature be within 3 minutes, and it is more preferable that it be within 1 minute.

When the reduction time is shorter, that is, the pressure and temperature are rapidly reduced, the diameter of the micropores can be smaller.

Furthermore, the present invention may further comprise a fourth step for crushing and classifying the polymer expanded particle, to adjust a diameter thereof using a general method.

It is preferable that the high pressure gas or the supercritical fluid comprises carbon dioxide as a main component.

In addition, the present invention may use nitrogen, mixture of carbon dioxide and nitrogen, etc.

The method for producing an expanded toner of the present comprises: a first step for mixing toner containing any one of styrene-acrylic copolymer resin, polyester resin or cyclic olefin copolymer resin, with high pressure gas or supercritical fluid, to prepare a mixture, a second step for impregnating with the high pressure gas or the supercritical fluid to the inside of the toner, a third step for reducing pressure and temperature of the mixture, to form the expanded toner, and a fourth step for crushing and classifying the expanded toner, to adjust a diameter thereof, wherein the pressure and temperature in the third step is reduced for 5 minutes or less from a state of 20 MPa or greater and 60 °C or greater to a state of less than 1 MPa and less than 30 °C, respectively.

It is preferable that the volume average particle diameter of the expanded toner be 5 µm to less than 15 µm, and it is more preferable that it be 5 µm to less than 10 µm.

### Producing apparatus

Fig. 1 is a schematic view showing an example of a producing apparatus for the polymer expanded particle.

Reference numeral 1 indicates a CO₂ bomb, reference numeral 2 indicates a cooler, reference numeral 3 indicates a high-pressure pump, reference numeral 4 indicates an impregnating tank, reference numeral 5 indicates a toner, reference numeral 6 indicates a constant temperature bath, reference symbol P indicates a pressure gage, reference symbol T indicates a thermocouple, and reference symbols V1 to V5 indicate valves.

The producing apparatus comprises a pressing portion of carbon dioxide, a constant temperature impregnating tank, and an injecting portion.

The CO₂ bomb 1, the cooler 2, the high-pressure pump 3, and the valves V1 to V4 compose the pressing portion of carbon dioxide.

The impregnating tank 4, the constant temperature bath 6, the pressure gage P, and the thermocouple T compose the constant temperature impregnating tank.

The valve V5 composes the injecting portion.

### EXAMPLES

### Example 1

The expanded toner of Example 1 was produced using the producing apparatus shown in Fig. 1.

As the impregnating tank 4, an impregnating tank (made of SUS 316, volume: 125 ml, maximum allowable working temperature: 200 °C, maximum allowable working pressure: 45 MPa) was used.

As the high-pressure pump 3, a plunger type pump which feeds solution by high-pressure (made by Fuji Pump Co., Ltd., maximum allowable working pressure: 100 MPa) was used.

As the valves V1 to V5, a valve (made by Swagelok Company, trade name: SS-3NTRS4) was used.

Specific works were carried out by following procedures. (i) The impregnating tank 4 which was empty was dried at 55 °C for about 1 hour using a drier which was not shown. Then, 2 g of the toner 5 before expanding (binder resin: cyclic olefin copolymer resin, volume average particle diameter: 300 µm) was inserted in the impregnating tank 4, and the impregnating tank 4 was further dried at 55 °C for about 1 hour using the drier.

Next, a carbon dioxide flowing condition was set by opening the valves V1 to V5, and by operating the cooler 2 and the high-pressure pump 3. Then, the valve V5 was closed. Therefore, a mixture was prepared by mixing the toner 5 with the carbon dioxide which was a high pressure gas (the first step).

Here, pressure in the impregnating tank 4 when the valve V5 was closed was the same as bomb pressure (6 MPa).
(ii) This impregnating tank 4 was dipped in the constant temperature bath 6 which was filled with 60 °C hot water.

In this time, since the valve V4 was opened, the carbon dioxide was continually fed by the high-pressure pump 3 and pressurization was continued. The valve V4 was closed, after the impregnating tank 4 was reached to target pressure (30MPa). Then, the cooler 2 and the high-pressure pump 3 were stopped.

Here, since the inside of the impregnating tank 4 was a supercritical state (60 °C, 30 MPa) of carbon dioxide, the carbon dioxide was impregnated to the inside of the toner 5 by maintaining this condition for 1 hour (the second step).
(iii) Next, the impregnating tank 4 was taken out the constant temperature bath 6, the valve V5 was opened at a room temperature (about 25 °C), and the toner 5 was expanded by jetting the carbon dioxide (The pressure was reduced from 30 MPa to 7 to 8 MPa for 10 seconds, then to 1 atm (about 0.1 MPa) for 30 seconds, that is, for total 40 seconds. In this time, the temperature in the impregnating tank was also reduced from 60 °C to about 25 °C.) (the third step).

As described above, an expanded toner of Example 1 was produced.

### Example 2

The toner was treated in the same manner as the steps (i) and (ii) in Example 1.
(iii) Next, the impregnating tank 4 was taken out the constant temperature bath 6, the valve V5 was opened at a room temperature (about 25 °C), and the toner 5 was expanded by jetting the carbon dioxide (The pressure was reduced from 30 MPa to 7 to 8 MPa for 30 seconds, then to 1 atm (about 0.1 MPa) for 30 seconds, that is, for total 1 minute. In this time, the temperature in the impregnating tank was also reduced from 60 °C to about 25 °C.) (the third step).

As described above, an expanded toner of Example 2 was produced.

### Example 3

The toner was treated in the same manner as the steps (i) and (ii) in Example 1.
(iii) Next, the impregnating tank 4 was taken out the constant temperature bath 6, the valve V5 was opened at a room temperature (about 25 °C), and the toner 5 was expanded by jetting the carbon dioxide (The pressure was reduced from 30 MPa to 7 to 8 MPa for 2 minutes 30 seconds, then to 1 atm (about 0.1 MPa) for 30 seconds, that is, for total 3 minutes. In this time, the temperature in the impregnating tank was also reduced from 60 °C to about 25 °C.) (the third step).

As described above, an expanded toner of Example 3 was produced. Comparative Example 1

The toner was treated in the same manner as the steps (i) and (ii) in Example 1.
(iii) Next, the impregnating tank 4 was taken out the constant temperature bath 6, the valve V5 was opened at a room temperature (about 25 °C), and the toner 5 was expanded by jetting the carbon dioxide (The pressure was reduced from 30 MPa to 7 to 8 MPa for 24 minutes 30 seconds, then to 1 atm (about 0.1 MPa) for 30 seconds, that is, for total 25 minutes. In this time, the temperature in the impregnating tank was also reduced from 60 °C to about 25 °C.) (the third step).

As described above, an expanded toner of Comparative Example 1 was produced.

The expanded toners of Examples and Comparative Example were evaluated according to the following methods.

### Average pore diameter

The poles were photographed by an electron microscope, length of 100 poles was measured, and average thereof was calculated as an average pore diameter.

### Pole diameter dispersion

The maximum value and the minimum value of the above lengths of 100 pores were searched, and difference therebetween was calculated as a pole diameter dispersion.

### Volume average particle diameter

The volume average particle diameter was measured by a Coulter counter method.

### Specific gravity

The specific gravity was calculated by bulk density.

Conditions and results of Examples and the Comparative Example are shown in Table 1.

Here, electron microscope images of the expanded toners of Example 2 and Comparative Example 1 are shown in Figs. 2 and 3, respectively.

**Table 1**

| | Conditions | Results | | | |
|---|---|---|---|---|---|
| | Reduction time of pressure and temperature | Average pore diameter | Pore diameter dispersion | Volume average pore diameter | Specific gravity |
| Example 1 | 40 seconds | 50 nm | 200 nm | 9.5 µm | 0.49 |
| Example 2 | 1 minute | 1.0 µm | 3.0 µm | 10.3 µm | 0.43 |
| Example 3 | 3 minutes | 9.8 µm | 15.2 µm | 13.5 µm | 0.25 |
| Comparative Example 1 | 25 minutes | 50 µm | 62.0 µm | 60.0 µm | 0.15 |

As is apparent from Figs. 2 and 3 and Table 1, the expanded toners of Examples 1 to 3 had the average pore diameters of micropores of less than 50 µm. In particular, the expanded toners of Examples 1 and 2 were very small, since the average pore diameters thereof were 1 µm or less.

The poles of the expanded toners of Examples 1 to 3 were uniform, as is apparent from the pore diameter dispersion.

Furthermore, in Examples 1 to 3, the expanded toners having a volume average particle diameter of less than 15 µm could be formed by minimizing the poles.

Additionally, the expanded toners of Examples 1 to 3 were preferable because the specific gravities were less than 0.5.

In contrast, in the expanded toner of Comparative Example 1, the average pore diameter, the pore diameter dispersion, and the volume average particle diameter were too large.

## Claims

1. A polymer expanded particle comprising micropores having an average pore diameter of less than 50 µm.

2. A polymer expanded particle comprising micropores having an average pore diameter of less than 3 µm.

3. The polymer expanded particle according to claim 2, wherein volume average particle diameter is less than 15 µm.

4. A expanded toner comprising micropores having an average pore diameter of 50 nm to less than 3 µm, wherein volume average particle diameter is 5 µm to less than 15 µm.

5. The expanded toner according to claim 4, wherein an average pore diameter of the micropores is 50 nm to 1 µm,

6. The expanded toner according to claim 4, wherein specific gravity is less than 0.9.

7. A method for producing a polymer expanded particle comprising:
a first step for mixing polymer particles selected from a group of polyolefine, polyolefine copolymer, cyclic olefin, cyclic olefin copolymer resin, polystyrene, polystyrene copolymer, acrylic resin, polycarbonate, polyester resin and combination thereof, with high pressure gas or supercritical fluid, to prepare a mixture,
a second step for impregnating with the high pressure gas or the supercritical fluid to the inside of the polymer particles, and
a third step for reducing pressure and temperature of the mixture, to form the polymer expanded particle,
wherein the pressure and temperature in the third step is reduced for 5 minutes or less from a state of 20 MPa or greater and 60 °C or greater to a state of less than 1 MPa and less than 30 °C, respectively.

8. The method for producing a polymer expanded particle according to claim 7, further comprising a fourth step for crushing and classifying the polymer expanded particle, to adjust a diameter thereof.

9. The method for producing a polymer expanded particle according to claim 7, wherein the high pressure gas or the supercritical fluid comprises carbon dioxide.

10. A method for producing an expanded toner comprising:
a first step for mixing toner containing any one of styrene-acrylic copolymer resin, polyester resin or cyclic olefin copolymer resin, with high pressure gas or supercritical fluid, to prepare a mixture,
a second step for impregnating with the high pressure gas or the supercritical fluid to the inside of the toner,
a third step for reducing pressure and temperature of the mixture, to form the expanded toner, and
a fourth step for crushing and classifying the expanded toner, to adjust a diameter thereof,
wherein the pressure and temperature in the third step is reduced for 5 minutes or less from a state of 20 MPa or greater and 60 °C or greater to a state of less than 1 MPa and less than 30 °C, respectively.
